# FASCICULE DE BREVET EUROPEEN

(11) **EP 1 548 250 B1**
(45) Date de publication et mention de la délivrance du brevet: **13.07.2011**
(21) Numéro de dépôt: 04300926.5
(22) Date de dépôt: 21.12.2004
(51) Int. Cl.: F02B 37/16, F02B 37/18, F02D 41/00

(54) **Moteur à combustion interne avec suralimentation pilotée et procédé de pilotage de la suralimentation**
Brennkraftmaschine mit gesteuerter Aufladung und Verfahren zur Steuerung der Aufladung
Internal combustion engine with controlled supercharging and method for controlling the supercharging

(30) Priorité: 24.12.2003 FR 0315352
(43) Date de publication de la demande: 29.06.2005
(73) Titulaire: Renault s.a.s., 92100 Boulogne Billancourt (FR)
(72) Inventeur: Prunier, Thierry, 94240 L'Hay les Roses (FR); Afonso, Vasco, 91590 Cerny (FR)

(56) Documents cités:
- GB-A- 2 077 354
- US-A- 5 694 899
- US-B1- 6 318 085

## Description

La présente invention a pour objet un moteur à combustion interne, notamment pour véhicule automobile, du type comprenant un turbocompresseur de suralimentation capable d'augmenter la pression des gaz d'admission fournis au moteur, des moyens étant prévus pour piloter la pression de suralimentation lors du fonctionnement du moteur,

La demande de brevet EP-A-1 008 739 (RENAULT) décrit un moteur à combustion interne suralimenté, comportant un compresseur interposé dans la conduite d'admission du moteur afin de comprimer les gaz d'admission fournis au moteur. Les gaz d'échappement issus du moteur à combustion interne traversent une turbine avant d'être rejetés dans une conduite d'échappement. L'énergie des gaz d'échappement transférée à la turbine permet l'entraînement du compresseur relié mécaniquement à la turbine. Pour éviter une instabilité de fonctionnement résultant d'une augmentation transitoire de la pression d'alimentation, ce document prévoit un retard de pilotage d'un papillon motorisé, commandant le débit des gaz admis dans le moteur.

Le brevet US-A-6 295 816 (GENERAL ELECTRIC) décrit un dispositif de commande de la pression maximale dans la chambre de combustion d'un moteur à combustion interne équipé d'un turbocompresseur. Une vanne de décharge est montée dans la conduite d'admission en aval du compresseur et peut être pilotée en fonction de la pression et de la température régnant dans le moteur à combustion interne. Les gaz d'échappement sont directement fournis à la turbine sans interposition d'un quelconque moyen de dérivation.

La demande de brevet EP-A-1 031 722 (MITSUBISHI) prévoit, dans un moteur à combustion interne équipé d'un turbocompresseur, deux valves pilotées simultanément par l'intermédiaire d'un automate de commande, de façon à maintenir une pression de suralimentation déterminée, dans le but de réduire les émissions d'oxydes d'azote émises par un moteur du type Diesel. Le résultat est obtenu par une action simultanée sur deux branches de dérivation montées respectivement en amont du compresseur et en aval de la turbine.

Le brevet US-A-6 318 085 (BOSCH) prévoit de disposer dans un moteur à combustion interne équipé d'un turbocompresseur, un circuit de dérivation du compresseur équipé d'une vanne à commande pneumatique en tout ou rien dont la position dépend de la pression d'admission en aval du papillon d'admission des gaz dans le moteur à combustion. La turbine est également équipée d'une canalisation de dérivation comportant une valve pilotée. Ce document prévoit en outre un réservoir de pression négative qui peut être mis en communication avec la commande pneumatique de la valve tout ou rien.

Le brevet US-A-6 134 888 (DRESSER) décrit, dans tel moteur à combustion interne équipé d'un turbocompresseur, un circuit de dérivation de la turbine équipe d'une vanne commandée en fonction de la pression d'admission, du régime de rotation du moteur à combustion et de la température ambiante. Une vanne bypass est également montée en aval du compresseur. Cette vanne bypass reste fermée tant que la pression d'admission est inférieure à une limite déterminée, puis s'ouvre selon un angle déterminé qui dépend des caractéristiques physiques du moteur. La vanne de dérivation montée sur la turbine est fermée pendant la phase de démarrage du moteur. Lors du fonctionnement normal du moteur, la vanne de dérivation de la turbine et la vanne bypass du compresseur sont ajustées simultanément pour contrôler le fonctionnement du turbocompresseur.

Le brevet US-A-5 694 899 (JENBACHER) décrit un dispositif de régulation d'un paramètre d'un moteur à combustion, en particulier un moteur comportant un turbocompresseur, dans lequel une vanne bypass est montée sur le compresseur mais où les gaz d'échappement du moteur sont directement amenés à la turbine sans aucun moyen de dérivation. Un automate de commande est capable de piloter la vanne de dérivation et le papillon d'admission des gaz comprimés fournis au moteur, les deux régulations étant alternativement actives.

Le pilotage de la pression de suralimentation d'un moteur à combustion interne équipé d'un turbocompresseur, lorsqu'il est fait au moyen d'une vanne de régulation en tout ou rien, généralement une vanne, actionnée pneumatiquement, comme c'est le cas par exemple dans le brevet US-A-6 318 085 précité, présente un certain nombre d'inconvénients. En effet, une telle commande mécanique et automatique de la vanne de dérivation ne permet pas un pilotage de la pression de suralimentation de façon suffisamment dynamique. Lors d'un changement de rapport de transmission ou lors d'une situation où le conducteur lève brutalement le pied en lâchant la pédale d'accélérateur, on constate des envolées du régime de rotation du moteur en raison de l'inertie de la régulation qui entraîne un maintien, voire une augmentation, de la pression de suralimentation, alors que le couple demandé au moteur a brutalement diminué.

On constate également des phénomènes de vibration du turbocompresseur dans ces phases de transition, correspondant à un passage de rapport de transmission ou à une phase de levé de pied du conducteur. Selon la valeur du rapport de pression entre l'amont et l'aval du compresseur et en fonction du débit traversant le compresseur, on constate en effet que le compresseur, au cours de ces phases de transition, entre dans une zone de fonctionnement générant des oscillations dans la roue du compresseur, oscillations qui sont responsables d'un phénomène appelé « pompage du turbocompresseur ».

L'ouverture d'une vanne de dérivation commandée pneumatiquement nécessite par ailleurs une certaine dépression dans la conduite d'admission. Lors d'une fermeture brutale du papillon d'admission des gaz dans le moteur, la pression régnant en amont du papilles se décharge dans la vanne de dérivation en provoquant des bruits désagréables.

L'invention a pour objet de supprimer les inconvénients de l'état de la technique et de permettre un pilotage de la pression de suralimentation dans un moteur à combustion interne équipé d'un turbocompresseur, supprimant les envolées de régime de rotation du moteur lors des phases transitoires et en particulier lors des passages des rapports de transmission.

L'invention a également pour objet un pilotage de la suralimentation qui supprime les effets de pompage du turbocompresseur et les bruits de décharge, en particulier lors de phases transitoires résultant par exemple d'un levé de pied du conducteur.

D'une manière générale, l'invention a pour objet un dispositif et un procédé de pilotage de la pression de suralimentation autorisant une maîtrise accrue de la pression des gaz en amont et en aval du collecteur d'admission du moteur à combustion interne.

Le moteur à combustion interne de l'invention, notamment pour véhicule automobile, est du type comprenant un compresseur monté dans une conduite d'admission pour augmenter la pression des gaz d'admission fournis au moteur, une turbine entraînant le compresseur et montée dans une conduite d'échappement des gaz issus du moteur, et un dispositif de pilotage de la pression des gaz d'admission. Ce dispositif de pilotage comprend une vanne commandée de dérivation des gaz d'échappement, montée dans la conduite d'échappement en amont de la turbine et une vanne de bypass montée dans une conduite de dérivation en parallèle du compresseur. La vanne de bypass est commandée par un dispositif de régulation. Un moyen de basculement est prévu pour sélectionner le pilotage de la pression des gaz d'admission, soit par la vanne de dérivation, soit par la vanne de bypass, en fonction de paramètres de fonctionnement du moteur.

Le moyen de basculement peut par exemple recevoir en entrée des signaux correspondant à un couple moteur de consigne et au régime de rotation du moteur.

Le pilotage de la pression de suralimentation des gaz à l'admission est donc adapté au fonctionnement du moteur. A chaque plage de fonctionnement du moteur correspond en effet un pilotage spécifique de la pression de suralimentation.

De préférence, le dispositif de régulation de la vanne de bypass reçoit en entrée des signaux correspondant à un couple demandé par le conducteur du véhicule ou à la position de la pédale d'accélérateur du véhicule.

Le dispositif de régulation peut avantageusement être du type PID et recevoir sur son entrée un signal fonction de la différence entre la pression mesurée des gaz d'admission et une pression de consigne des gaz d'admission. Il en résulte une parfaite maîtrise de la pression en aval du compresseur qui permet une suppression des envolées de régime lors des passages des rapports de transmission.

La vanne de dérivation des gaz d'échappement est avantageusement commandée également par un dispositif de régulation du type PID recevant sur son entrée un signal fonction de la différence entre la pression mesurée des gaz d'admission et une pression de consigne des gaz d'admission. la régulation tenant compte en outre du régime de rotation du moteur.

Le procédé selon l'invention permet le pilotage de la pression de suralimentation des gaz d'admission fournis à un moteur à combustion interne, notamment pour véhicule automobile, du type comprenant un compresseur et une turbine entraînant le compresseur au moyen des gaz d'échappement issus du moteur. Le procédé consiste notamment à effectuer le pilotage séquentiellement, soit par une dérivation contrôlée du flux de gaz traversant le compresseur, soit par une dérivation contrôlée du flux de gaz traversant la turbine.

Un pilotage conjoint n'est effectué qu'au moment des transitions entre les deux types de pilotage.

Le choix du type de pilotage est fait par exemple en fonction d'une cartographie d'un couple de consigne et du régime de rotation du moteur.

Le pilotage par dérivation contrôlée du flux de gaz traversant le compresseur peut être fait par une régulation en fonction de la différence entre la pression mesurée des gaz d'admission et une pression de consigne des gaz d'admission.

Le pilotage par dérivation contrôlée du flux de gaz traversant la turbine peut être fait par une régulation en fonction de la différence entre la pression mesurée des gaz d'admission et une pression de consigne des gaz d'admission, la régulation tenant compte également du régime de rotation du moteur.

L'invention sera mieux comprise à l'étude d'un mode de réalisation décrit à titre d'exemple nullement limitatif et illustré par les dessins annexés, sur lesquels :
- la figure 1 illustre schématiquement les principaux éléments d'un dispositif de pilotage de la suralimentation d'un moteur à combustion interne ; et
- la figure 2 illustre schématiquement, sous forme d'un schéma-bloc, un exemple de réalisation d'une régulation séquentielle des deux vannes de dérivation utilisées.

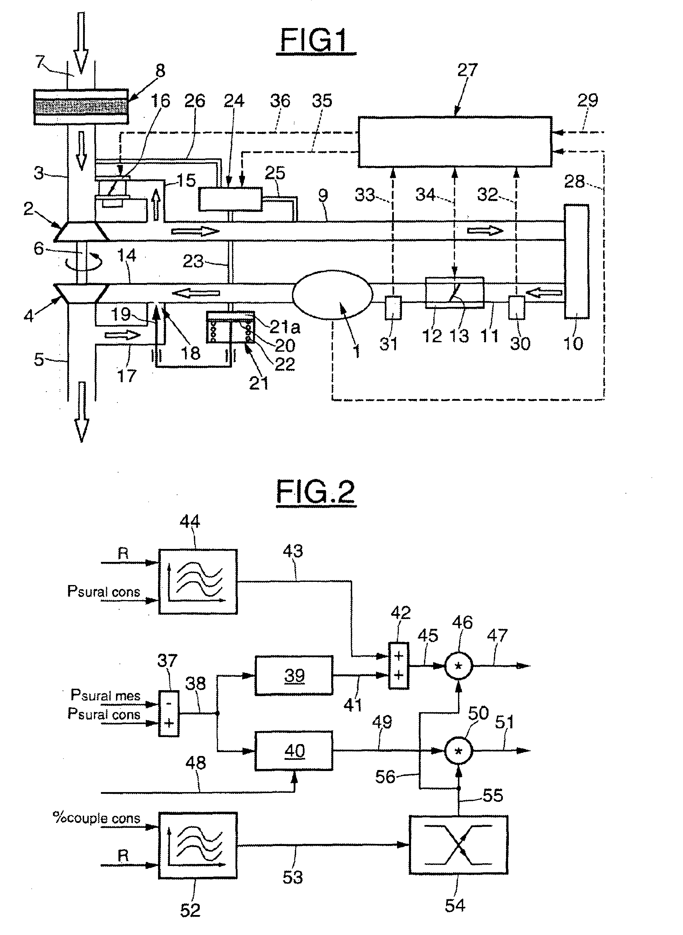

Tel qu'illustré sur la figure 1, le moteur à combustion interne 1 comprend un compresseur 2 monté dans une conduite d'admission 3 et une turbine 4 montée dans une conduite d'échappement 5. La turbine 4 et le compresseur 2 sont reliés mécaniquement par un arbre 6.

L'air frais arrivant par la conduite d'entrée 7 traverse tout d'abord un filtre à air, référencé, 8 dans son ensemble, avant d'être amené, à l'entrée du compresseur 2. Les gaz comprimés à une pression dite « pression de suralimentation » sortent du compresseur par la canalisation 9 et traversent un radiateur 10 qui maintient leur température à un niveau convenable, par exemple de l'ordre de 60 à 70°C. A la sortie du radiateur 10, les gaz d'admission s'écoulent dans la canalisation 11 et traversent le papillon d'admission 12 qui est muni d'un volet commandé, 13 avant d'être fournis au moteur à combustion 1. Les gaz d'échappement issus du moteur 1 sont amenés par la canalisation 14 à l'entrée de la turbine 4.

Une première branche de dérivation 15 est prévue sur le compresseur 2 entre la conduite 9 et la conduite 3. Une vanne de bypass 16 est montée dans la branche de dérivation 15.

Une deuxième branche de dérivation 17 est prévue sur la turbine 4 entre la conduite d'échappement 5 et la conduite 14. Une vanne de dérivation 18 est montée dans la branche de dérivation 17. Dans l'exemple illustré, la vanne de dérivation 18 comprend une tête d'obturation 19, mobile sous l'action d'un piston 20 monté à l'intérieur d'un cylindre étanche 2.1. Le piston 20 est soumis, d'une part, à un ressort de rappel 22, et, d'autre part, à une pression pneumatique s'exerçant dans la chambre 21a du cylindre 21. La chambre 21a communique par une conduite de commande 23 avec une électrovanne de commande. 24 qui peut mettre en communication la conduite de commande 23, soit avec la pression de suralimentation prise dans la conduite 9 par l'intermédiaire d'une conduite de commande 25, soit avec la pression des gaz à l'entrée du compresseur dans la conduite 3 par l'intermédiaire d'une conduite de commande 26.

Une unité de commande électronique 27 reçoit des signaux sur le fonctionnement, du moteur thermique par la connexion 28, ainsi que d'autres signaux, tels que la position de la pédale d'accélérateur du véhicule, ou encore une information sur les passages des rapports de transmission, l'ensemble étant symbolisé par la connexion 29. L'unité électronique 27 reçoit également, par l'intermédiaire des connexions 32, 33, des signaux en provenance de capteurs de pression et de température 30, 31, montés dans la conduite d'admission 11.

L'unité électronique de commande 27, qui comporte différents algorithmes et mémoires, est capable d'émettre des signaux de commande destinés respectivement au volet 13 du papillon d'admission 12 par la connexion 34, à l'électrovanne de commande 24 par la connexion 35, et à la vanne de bypass 16 par la connexion 36.

Le pilotage de la pression de suralimentation est explicité sur la figure 2.

Un signal correspondant à la pression de suralimentation mesurée par le capteur 30 (P_{sural mes}) est amené sur l'entrée négative d'un comparateur 37. Une valeur de consigne de la pression de suralimentation (P_{sural cons}) est amenée sur l'entrée positive du même comparateur 37. Le comparateur 37 est capable, de comparer ces deux signaux et d'émettre un signal d'erreur sur sa sortie 38, qui constitue l'entrée à la fois du régulateur 39 de la vanne de dérivation 18 et du régulateur 40 de la vanne de bypass 16. Les régulateurs 39 et 40 peuvent être de type approprié selon les caractéristiques que l'on souhaite obtenir. On pourra avantageusement, utiliser des régulateurs du type PID. La sortie du régulateur 39 est amenée à l'une des entrées positives d'un comparateur 42. La deuxième entrée positive 43 du comparateur 42 reçoit un signal issu d'un bloc 44 comprenant une cartographie mémorisée du régime de rotation R du moteur thermique et de la valeur de consigne de la pression de suralimentation. La sortie du comparateur 42 est amenée à l'une, des entrées 45 d'un additionneur 46, qui émet un signal sur sa sortie 47 pour la commande d'ouverture de la vanne de dérivation 18, Ce signal d'ouverture correspond avantageusement à un rapport cyclique d'ouverture en fonction du cycle de fonctionnement du moteur thermique.

Le régulateur 40 reçoit également sur son entrée 48 des signaux correspondant au couple demandé par le conducteur du véhicule ou à la position de la pédale d'accélérateur du véhicule. Le régulateur 40 émet sur sa sortie 49 un signal qui est amené sur l'une des entrées d'un additionneur 50, qui émet sur sa sortie 51 un signal d'ouverture de la vanne de bypass 16. Comme précédemment, ce signal d'ouverture est avantageusement sous la forme d'un rapport cyclique d'ouverture de la vanne de bypass 16, en fonction du cycle de fonctionnement du moteur thermique.

Un bloc 52 comprenant une cartographie mémorisée du pourcentage du couple de consigne en fonction du régime de rotation R du moteur, émet sur sa sortie 53 un signal qui est amené à un bloc de basculement 54 capable de gérer le pilotage en sélectionnant le pilotage de la suralimentation, soit par la vanne de dérivation 18, soit par la vanne de bypass 16. A cet effet, le bloc de basculament 54 émet sur sa sortie 55 un signal qui est amené, d'une part, sur l'additionneur 50, et, d'autre part, par la connexion 56 sur l'additionneur 46.

Le bloc de basculement 54 est ainsi capable de sélectionner l'émission d'un signal d'ouverture de la vanne de dérivation 18 par la sortie 47, ou, au contraire, d'un signal d'ouverture de la vanne de bypass 16 par la sortie 51. Le pilotage de la suralimentation se fait donc selon l'invention de façon séquentielle, chacune des vannes commandées, à savoir la vanne de dérivation 18 montée sur la turbine ou la vanne de bypass 16 montée sur le compresseur, sont utilisées en fonction d'un domaine particulier de charge et de régime de rotation du moteur thermique, domaine qui est propre à chaque circuit de dérivation en fonction des choix de mise au point ou des contraintes techniques du moteur à combustion utilisé. On comprendra qu'au moment de la transition ou du basculement réalisé par le bloc de basculement 54, un pilotage conjoint temporaire de la suralimentation soit effectué par les deux vannes de dérivation. Le choix de la vanne de dérivation pilotant la suralimentation est fonction de la cartographie contenue dans le bloc 52.

Le fonctionnement du pilotage par la vanne de bypass 16 commandée permet un pilotage de la pression de suralimentation en amont, du papillon d'admission 12 particulièrement dynamique, Il en résulte une élimination des phénomènes de pompage du turbocompresseur qui ne risque pratiquement plus d'entrer dans une zone de fonctionnement dite « de pompage », en particulier lors des phases transitoires correspondant à un brusque levé de pied du conducteur ou à un passage d'un rapport de transmission à un autre. En effet, l'ouverture de la vanne de bypass commandée 16 suit très rapidement l'information sur la position de la pédale d'accélérateur qui est fournie au régulateur 40 par la connexion 48.

Il en résulte une excellente maîtrise de la pression régnant en amont et en aval du collecteur d'admission, réduisant ainsi les envolées de régime de rotation du moteur lors du passage des rapports de transmission.

De la même manière, une baisse de pression dans le collecteur d'admission entraîne, grâce à la régulation 40 de la vanne de bypass, une ouverture anticipée de la vanne de bypass 16, avant même qu'un bouchon de pression se forme en amont du papillon d'admission 12, atténuant ainsi les bruits d'air ou de décharge du circuit de suralimentation.

## Revendications

1. Moteur à combustion interne, notamment pour véhicule automobile, du type comprenant un compresseur (2) monté dans une conduite d'admission (3, 9) pour augmenter la pression des gaz d'admission fournis au moteur (1), une turbine (4) entraînant le compresseur et montée dans une conduite (5, 14) d'échappement des gaz issus du moteur, et un dispositif de pilotage de la pression des gaz d'admission, avec une vanne commandé (18) de dérivation des gaz d'échappement montée dans la conduite d'échappement en amont de la turbine et une vanne de bypass (16) montée dans une conduite de dérivation (15) en parallèle du compresseur, **caractérisé par le fait que** la vanne de bypass (16) est commandée par un dispositif de régulation (40) et qu'un moyen de basculement (54) est prévu pour sélectionner le pilotage de la pression des gaz d'admission, soit par la vanne de dérivation, soit par la vanne de bypass, en fonction de paramètres de fonctionnement du moteur.

2. Moteur à combustion interne selon la revendication 1, **caractérisé par le fait que** le moyen de basculement (54) reçoit en entrée des signaux correspondant à un couple moteur de consigne et au régime de rotation du moteur.

3. Moteur à combustion interne selon l'une des revendications 1 ou 2, **caractérisé par le fait que** le dispositif de régulation (40) de la vanne de bypass reçoit en entrée (48) des signaux correspondant à un couple demandé par le conducteur du véhicule ou à la position de la pédale d'accélérateur du véhicule.

4. Moteur à combustion interne selon l'une quelconque des revendications précédentes, **caractérisé par le fait que** le dispositif de régulation (40) de la vanne de bypass est du type PID et reçoit sur son entrée un signal fonction de la différence entre la pression mesurée des gaz d'admission et une pression de consigne des gaz d'admission.

5. moteur à combustion interne selon l'une quelconque des revendications précédentes, **caractérisé par le fait que** la vanne de dérivation des gaz d'échappement est commandée par un dispositif de régulation (39) du type PIED recevant sur son entrée un signal fonction de la différence entre la pression mesurée des gaz d'admission et une pression de consigne des gaz d'admission, la régulation tenant compte également du régime de rotation du moteur.

6. Procédé de pilotage de la pression de suralimentation des gaz d'admission fournis à un moteur à combustion interne, notamment pour véhicule automobile, du type comprenant un compresseur et une turbine entraînant le compresseur au moyen des gaz d'échappement issus du moteur, **caractérisé par le fait que** le pilotage est fait séquentiellement, soit par une dérivation contrôlée du flux de gaz traversant le compresseur, soit par une dérivation contrôlée du flux de gaz traversant la turbine.

7. Procédé selon la revendication 6, **caractérisé par le fait qu'**un pilotage conjoint n'est effectué qu'au moment des transitions entre les deux types de pilotage.

8. Procédé selon l'une des revendications 6 ou 7, **caractérisé par le fait que** le choix du type de pilotage est fait en fonction d'une cartographie d'un couple de consigne et du régime de rotation du moteur.

9. Procédé selon l'une quelconque des revendications 6 à 8, **caractérisé par le fait que** le pilotage par dérivation contrôlée du flux de gaz traversant le compresseur est fait par une régulation en fonction de la différence entre la pression mesurée des gaz d'admission et une pression de consigne des gaz d'admission.

10. Procédé selon l'une quelconque des revendications 6 à 9, **caractérisé par le fait que** le pilotage par dérivation contrôlée du flux de gaz traversant la turbine est fait par une régulation en fonction de la différence entre la pression mesurée des gaz d'admission et une pression de consigne des gaz d'admission, la régulation tenant compte également du régime de rotation du moteur.

## Claims

1. Internal combustion engine, notably for a motor vehicle, of the type comprising a compressor (2) mounted in an intake duct (3, 9) to increase the pressure of the intake gases supplied to the engine (1), a turbine (4) driving the compressor and mounted in an exhaust duct (5, 14) for the gases from the engine, and a device for controlling the pressure of the intake gases, with a controlled valve (18) for diverting the exhaust gases mounted in the exhaust duct upstream of the turbine and a bypass valve (16) mounted in a diversion duct (15) in parallel with the compressor, **characterized in that** the bypass valve (16) is controlled by a regulation device (40) and that a switchover means (54) is provided to select the controlling of the pressure of the intake gases, either by the diversion valve, or by the bypass valve, based on operating parameters of the engine.

2. Internal combustion engine according to Claim 1, **characterized in that** the switchover means (54) receives as input signals corresponding to a set point engine torque and to the rotation speed of the engine.

3. Internal combustion engine according to one of Claims 1 and 2, **characterized in that** the regulation device (40) of the bypass valve receives as input (48) signals corresponding to a torque requested by the driver of the vehicle or to the position of the accelerator pedal of the vehicle.

4. Internal combustion engine according to any one of the preceding claims, **characterized in that** the regulation device (40) of the bypass valve is of the PID type and receives at its input a signal that is a function of the difference between the measured pressure of the intake gases and a set point pressure of the intake gases.

5. Internal combustion engine according to any one of the preceding claims, **characterized in that** the diversion valve for the exhaust gases is controlled by a regulation device (39) of the PID type receiving at its input a signal that is a function of the difference between the measured pressure of the intake gases and a set point pressure of the intake gases, the regulation also taking into account the speed of rotation of the engine.

6. Method for controlling the supercharging pressure of the intake gases supplied to an internal combustion engine, notably for a motor vehicle, of the type comprising a compressor and a turbine driving the compressor by means of the exhaust gases from the engine, **characterized in that** the control is conducted sequentially, either by a controlled diversion of the flow of gas passing through the compressor, or by a controlled diversion of the flow of gas passing through the turbine.

7. Method according to Claim 6, **characterized in that** a joint control is performed only at the moment of the transitions between the two types of control.

8. Method according to one of Claims 6 or 7, **characterized in that** the choice of the type of control is made on the basis of a mapping of a set point torque and of the speed of rotation of the engine.

9. Method according to any one of Claims 6 to 8, **characterized in that** the control by controlled diversion of the flow of gas passing through the compressor is conducted by a regulation as a function of the difference between the measured pressure of the intake gases and a set point pressure of the intake gases.

10. Method according to any one of Claims 6 to 9, **characterized in that** the control by controlled diversion of the flow of gas passing through the turbine is conducted by a regulation as a function of the difference between the measured pressure of the intake gases and a set point pressure of the intake gases, the regulation also taking into account the speed of rotation of the engine.

## Patentansprüche

1. Brennkraftmaschine, insbesondere für Kraftfahrzeug, des Typs, der einen in einer Einlassleitung (3, 9) montierten Kompressor (2), um den Druck der Einlassgase, die der Maschine (1) zugeführt werden, zu erhöhen, eine Turbine (4), die den Kompressor antreibt und in einer Abgasleitung (5, 14) für die von der Maschine ausgegebenen Gase montiert ist, und eine Vorrichtung für die Steuerung des Drucks der Einlassgase, die mit einem gesteuerten Abzweigventil (18) für die Abgase, das in der Abgasleitung stromaufseitig der Turbine montiert ist, und mit einem Nebenleitungsventil (16), das in einer Abzweigleitung (15) parallel zum Kompressor montiert ist, versehen ist, umfasst, **dadurch gekennzeichnet, dass** das Nebenleitungsventil (16) durch eine Regulierungsvorrichtung (40) gesteuert wird und dass ein Kippmittel (54) vorgesehen ist, um die Steuerung des Drucks der Einlassgase in Abhängigkeit von Betriebsparametern der Maschine entweder durch das Abzweigventil oder durch das Nebenleitungsventil auszuwählen.

2. Brennkraftmaschine nach Anspruch 1, **dadurch gekennzeichnet, dass** das Kippmittel (54) am Eingang Signale empfängt, die einem Sollmaschinendrehmoment und der Drehzahl der Maschine entsprechen.

3. Brennkraftmaschine nach einem der Ansprüche 1 oder 2, **dadurch gekennzeichnet, dass** die Regulierungsvorrichtung (40) für das Nebenleitungsventil am Eingang (48) Signale empfängt, die einem vom Fahrer des Fahrzeugs geforderten Drehmoment oder der Position des Fahrpedals des Fahrzeugs entsprechen.

4. Brennkraftmaschine nach einem der vorhergehenden Ansprüche, **dadurch gekennzeichnet, dass** die Regulierungsvorrichtung (40) für das Nebenleitungsventil vom PID-Typ ist und an ihrem Eingang ein Signal empfängt, das von der Differenz zwischen dem gemessenen Druck der Einlassgase und einem Solldruck der Einlassgase abhängt.

5. Brennkraftmaschine nach einem der vorhergehenden Ansprüche, **dadurch gekennzeichnet, dass** das Abzweigventil für die Abgase durch eine Regulierungsvorrichtung (39) des PID-Typs gesteuert wird, die an ihrem Eingang ein Signal empfängt, das von der Differenz zwischen dem gemessenen Druck der Einlassgase und einem Solldruck der Einlassgase abhängt, wobei die Regulierung auch die Drehzahl der Maschine berücksichtigt.

6. Verfahren zum Steuern des Zufuhrüberdrucks der Einlassgase, die einer Brennkraftmaschine insbesondere für ein Kraftfahrzeug des Typs, der einen Kompressor und eine Turbine, die den Kompressor mittels der vom Motor ausgegebenen Abgase antreibt, umfasst, zugeführt werden, **dadurch gekennzeichnet, dass** die Steuerung sequentiell entweder durch eine gesteuerte Abzweigung des den Kompressor durchquerenden Gasstroms oder durch eine gesteuerte Abzweigung des die Turbine durchquerenden Gasstroms erfolgt.

7. Verfahren nach Anspruch 6, **dadurch gekennzeichnet, dass** eine gemeinsame Steuerung nur zum Zeitpunkt der Übergänge zwischen den zwei Steuerungstypen ausgeführt wird.

8. Verfahren nach einem der Ansprüche 6 oder 7, **dadurch gekennzeichnet, dass** die Wahl des Typs der Steuerung als Funktion eines Kennfelds eines Solldrehmoments und der Drehzahl der Maschine erfolgt.

9. Verfahren nach einem der Ansprüche 6 bis 8, **dadurch gekennzeichnet, dass** die Steuerung durch gesteuerte Abzweigung des den Kompressor durchquerenden Gasstroms durch eine Regulierung als Funktion der Differenz zwischen dem gemessenen Druck der Einlassgase und einem Solldruck der Einlassgase erfolgt.

10. Verfahren nach einem der Ansprüche 6 bis 9, **dadurch gekennzeichnet, dass** die Steuerung durch gesteuerte Abzweigung des die Turbine durchquerenden Gasstroms durch eine Regulierung als Funktion der Differenz zwischen dem gemessenen Druck der Einlassgase und einem Solldruck der Einlassgase erfolgt, wobei die Regulierung auch die Drehzahl der Maschine berücksichtigt.
